# EUROPÄISCHE PATENTSCHRIFT

(11) **EP 1 075 696 B1**
(45) Veröffentlichungstag und Bekanntmachung des Hinweises auf die Patenterteilung: **29.01.2003**
(21) Anmeldenummer: 99923488.3
(22) Anmeldetag: 28.04.1999
(51) Int. Cl.: G21D 3/04

(54) **VERFAHREN UND VORRICHTUNG ZUR ÜBERWACHUNG DES LEISTUNGSANSTIEGS BEIM ANFAHREN EINES KERNREAKTORS (DIVERSITÄRE EXKURSIONSÜBERWACHUNG)**
METHOD AND DEVICE FOR MONITORING THE INCREASE IN POWER DURING A NUCLEAR REACTOR START-UP (DIVERSITARY EXCURSION MONITORING)
PROCEDE ET DISPOSITIF POUR SURVEILLER LA MONTEE EN PUISSANCE LORS DU DEMARRAGE D'UN REACTEUR NUCLEAIRE (SURVEILLANCE D'EXCURSION DIVERSITAIRE)

(30) Priorität: 28.04.1998 DE 19819001
(43) Veröffentlichungstag der Anmeldung: 14.02.2001
(73) Patentinhaber: Framatome ANP GmbH, 91050 Erlangen (DE)
(72) Erfinder: SCHULZE, Joachim, D-60598 Frankfurt am Main (DE)
(74) Vertreter: Mörtel & Höfner
(86) Internationale Anmeldenummer: EP9902887
(87) Internationale Veröffentlichungsnummer: WO99056285

(56) Entgegenhaltungen:
- EP-A- 0 405 863
- WO-A-97/23879
- US-A- 3 979 255
- US-A- 4 186 048
- DATABASE WPI Section Ch, Week 9601 Derwent Publications Ltd., London, GB; Class K05, AN 96-004267 XP002112521 & JP 07 280984 A (TOSHIBA KK), 27. Oktober 1995 (1995-10-27)
- PATENT ABSTRACTS OF JAPAN vol. 015, no. 320 (P-1238), 15. August 1991 (1991-08-15) & JP 03 115996 A (TOSHIBA CORP), 16. Mai 1991 (1991-05-16)
- PATENT ABSTRACTS OF JAPAN vol. 003, no. 151 (M-084), 12. Dezember 1979 (1979-12-12) & JP 54 129295 A (TOSHIBA CORP), 6. Oktober 1979 (1979-10-06)

## Beschreibung

Die Erfindung betrifft ein Verfahren und eine Einrichtung zum Überwachen bzw. Begrenzen des Leistungsanstiegs beim Anfahren eines Kernreaktors, bei dem die lokale Leistung in einzelnen Bereichen des Kerns - wie z.B. in WO 96/21929 und EP 0 496 551 beschrieben - im Normalbetrieb mittels Meßsignalen in sogenannten "Leistungsbereichskanälen" erfaßt wird.

Beim Anfahren eines Kernreaktors wird der Neutronenflußpegel, welcher proportional zu der durch Kernspaltungen erzeugten Leistung des Reaktors ist, vom Neutronenfluß-Quellpegel bei etwa 10⁻⁹ der Nennleistung zunächst bis zum Erreichen einer Aufheizleistung gesteigert, die z.B. etwa 10⁻³ der Nennleistung beträgt. In diesem Zwischenbereich der Reaktorleistung verändert das Ansteigen der Neutronenflußdichte die thermischen Verhältnisse im Reaktorkern, d.h. insbesondere die Temperaturen des Kernbrennstoffs, praktisch nicht, so daß sich so gut wie keine Reaktivitäts-Rückkopplungseffekte ergeben, welche die Anstiegsrate der Neutronenflußdichte beeinflussen könnten. Erst oberhalb dieses Zwischenbereichs - also im Prozentbereich der Reaktorleistung (unterster Leistungsbereich) - setzt aufgrund der dann fühlbaren Erwärmung des Kernbrennstoffs und dem daraus resultierenden (um die Brennstoff-Zeitkonstante verzögerten) Energieeintrag in das Kühlmittel eine den Reaktivitäts-Koeffizienten des Reaktorkerns entsprechende Reaktivitäts-Rückkopplung ein, welche in der Regel eine ständige Verlangsamung des Leistungsanstiegs bewirkt, bis er vollständig zum Erliegen gekommen ist.

Das Ansteigen der Neutronenflußdichte durch die vielen Dekaden des Zwischenbereichs wird durch Einstellen eines leicht überkritischen Kernzustands bewirkt. Der effektive Multiplikationsfaktor der Kernanordnung k_{eff} wird also geringfügig über 1 angehoben. Hierzu dienen geeignete Reaktivitäts-Stellmittel, bei denen es sich bei dem hier vorzugsweise betrachteten Siedewasser-Reaktortyp im allgemeinen um Steuerstäbe handelt, deren Absorptionswirkung für Neutronen durch dosiertes Herausfahren aus dem Kern gezielt vermindert wird. Die Neutronenflußdichte steigt nach Erreichen eines überkritischen Kernzustands gemäß einer Exponentialfunktion an. Die Anstiegsrate kann durch Angabe der sogenannten Reaktorperiode gekennzeichnet werden. Die Reaktorperiode ist diejenige Zeitspanne, in der sich die Neutronenflußdichte im Kern um den Faktor e = 2,718.... verändert.

Die durch eine Kernspaltung frei werdende Neutronen sind teils "prompte" Neutronen, die vom gespaltenen Kern sofort frei gesetzt werden, teils "verzögerte Neutronen", die von instabilen Folgekernen stammen.

Bei einem normalen Anfahrvorgang wird die Überschußreaktivität des Kerns (also der den Wert 1 übersteigende Teil des effektiven Multiplikationsfaktors k_{eff}) so eingestellt, daß die verzögerten Neutronen den bestimmenden Einfluß auf die Anstiegsrate der Neutronenflußdichte behalten. Um eine gute Steuerbarkeit zu gewährleisten, ist es üblich, das Anfahren so vorzunehmen, daß die Reaktorperiode mehr als 30 Sekunden beträgt.

Aufgrund von Fehlbedienungen oder Störfällen kann die Überschußreaktivität beim Anfahren des Kernreaktors jedoch auch so groß werden, daß die Anstiegsrate der Neutronenflußdichte ausschließlich von den prompten Neutronen mit ihrer sehr schnellen Generationenfolge bestimmt wird und die verzögerten Neutronen jeden Einfluß auf die Anstiegsrate verlieren. Dieser Reaktorzustand wird als "prompt kritisch" bezeichnet. Die zugehörige Reaktorperiode liegt weit unterhalb von 1 Sekunde. Der Anfahrvorgang geht dann in eine "Exkursion" über, bei der - je nach Überschußreaktivität - kurzzeitig der Nennwert der Reaktorleistung überschritten wird, ehe die Leistung durch inhärente Reaktivitäts-Gegenkopplung abgefangen wird. Anders als bei den unter-prompt-kritischen Anfahrvorgängen fängt sich der Leistungsanstieg bei Exkursionen also nicht bereits im untersten Leistungsbereich ab.

Für die nukleare Instrumentierung des Kernreaktors ergibt sich die Aufgabenstellung, bei Auftreten einer Exkursion zuverlässig und so rechtzeitig eine Reaktorschnellabschaltung automatisch auszulösen, daß mindestens denkbare Folgeexkursionen unterbunden werden.

Im folgenden wird als bevorzugtes Beispiel ein Siedewasserreaktor und ein übliches Instrumentierungssystem für die Überwachung und Steuerung nach dem Stand der Technik betrachtet.

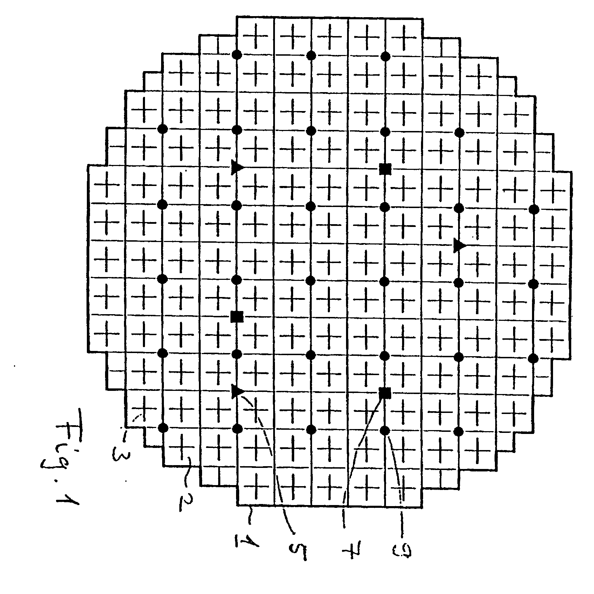

Figur 1 zeigt schematisch eine typische Anordnung der Detektoren der verschiedenen nuklearen Instrumentierungssysteme. Die über den Querschnitt des Reaktorkerns 1 verteilten Brennelemente sind zu Zellen 2 von jeweils vier Brennelementen zusammengefaßt, die um einen gemeinsamen, kreuzförmigen Steuerstab 3 herum angeordnet sind. Die Instrumentierung enthält drei Systeme, nämlich für den Anfahrbereich AD (für einen Neutronenfluß P, der etwa bis 10⁻⁵ des Normflusses reicht, auf den der Reaktor ausgelegt ist), den Übergangsbereich UD (P etwa 10⁻⁶ bis 10⁻¹) und den Leistungsbereich (P etwa ab 10⁻²), auf den die Meßempfindlichkeit der zugeordneten Detektoren und Auswerteeinrichtungen abgestimmt sind. Üblicherweise sind jeweils mehrere Detektoren in Meßlanzen im Inneren des Reaktorkerns zwischen den Brennelementen angeordnet, wobei die Auswerteeinrichtungen der Systeme jeweils zu redundant arbeitenden Kanälen derart zusammengefaßt sind, daß beim Ausfall eines Detektors oder dessen Auswerteeinrichtung oder Stromversorgung höchstens ein Kanal ausfällt. Dabei kann die Zuordnung der Detektoren und Meßlanzen zu den Kanälen linear sein (z.B. sind nach Figur 1 jeweils drei Meßlanzen 5 und 7 für das System des Anfahrbereichs AD bzw. des Übergangsbereichs UD vorgesehen, deren Detektoren und Auswerteeinheiten jeweils einen Kanal bilden); es wäre aber auch möglich, in jeder Meßlanze mehrere Detektoren vorzusehen und die Auswerteeinrichtungen so zu vernetzen, daß jedem Kanal Detektoren, Auswerteeinrichtungen und Stromversorgungen von unterschiedlichen Meßlanzen zugeordnet sind.

Diese Vernetzung ist für das System des Leistungsbereichs vorgesehen. Die Meßlanzen 9, die über den ganzen Querschnitt des Kerns verteilt sind, tragen zur Bildung von drei Überwachungskanälen jeweils mindestens drei Leistungsverteilungsdetektoren, die jeweils auf einem unterschiedlichen Niveau angeordnet sind und deren Meßsignale dazu benutzt werden können, die lokale Leistung im Reaktor zu messen und die dreidimensionale Leistungsverteilung mittels dreier unabhängiger Leistungsverteilungskanäle redundant zu ermitteln. Um für die Steuerung oder Regelung des Reaktors einen Istwert (Meßsignal) der gesamten Leistung zu gewinnen, enthält das LD-System drei Leistungsbereichskanäle, in denen die Meßsignale von Leistungsverteilungsdetektoren 9 summiert werden. Dabei kann es vorgesehen sein, defekte Detektoren oder Auswerteeinrichtungen aus der Bildung der Leistungsverteilungssignale und/oder eines Leistungsbereichssignals auszuschalten und eine dadurch entstehende Verzerrung der Signale durch Zuoder Abschalten weiterer Detektor-Signale in dem entsprechenden Kanal zu kompensieren.

In Figur 1 ist also jedes System aus Redundanzgründen mit mehreren voneinander unabhängigen und untereinander gleichartigen Meßkanälen ausgerüstet. Bei dem in Figur 1 gezeigten Beispiel sind es drei Meßkanäle pro System.

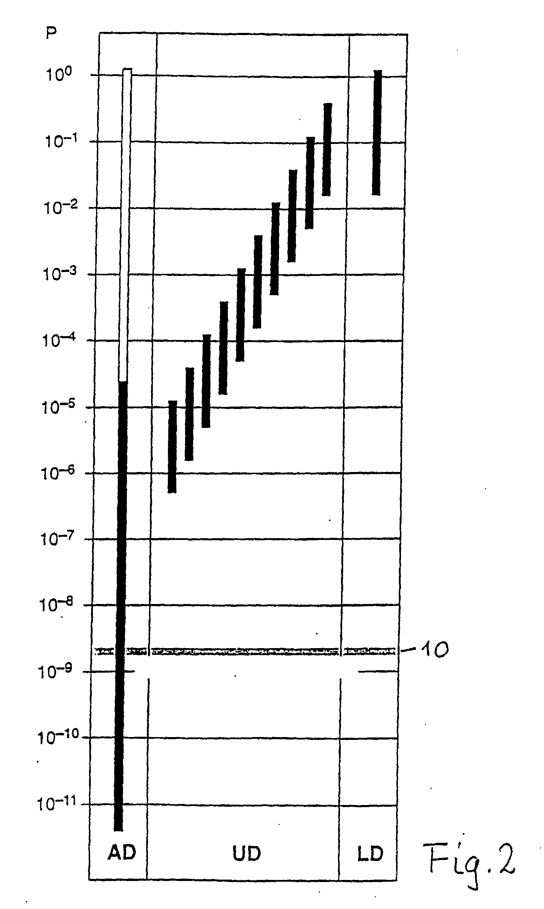

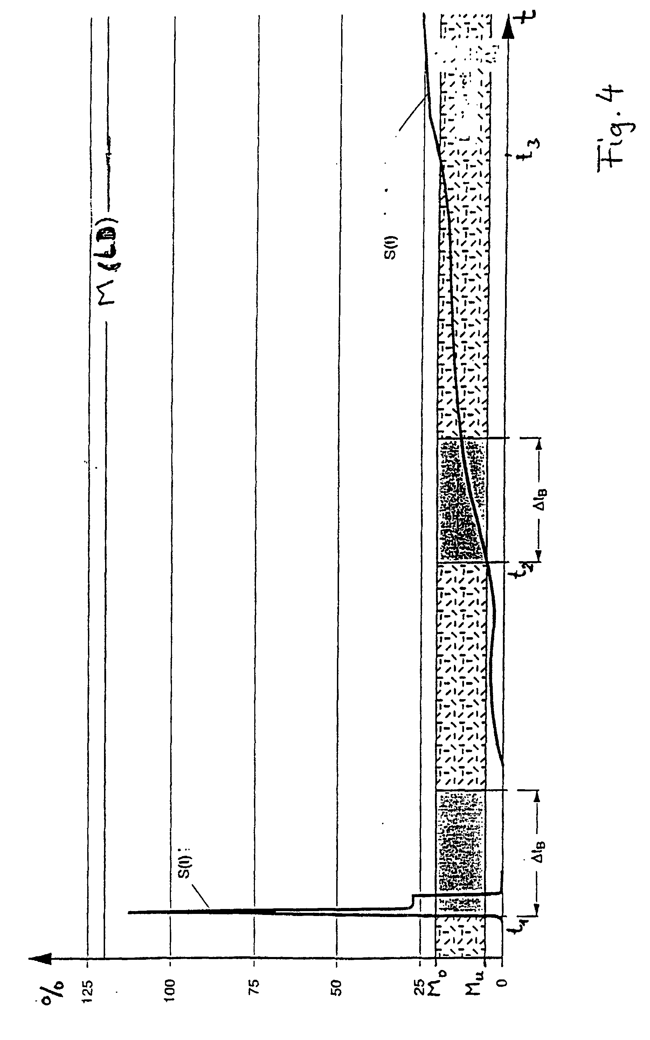

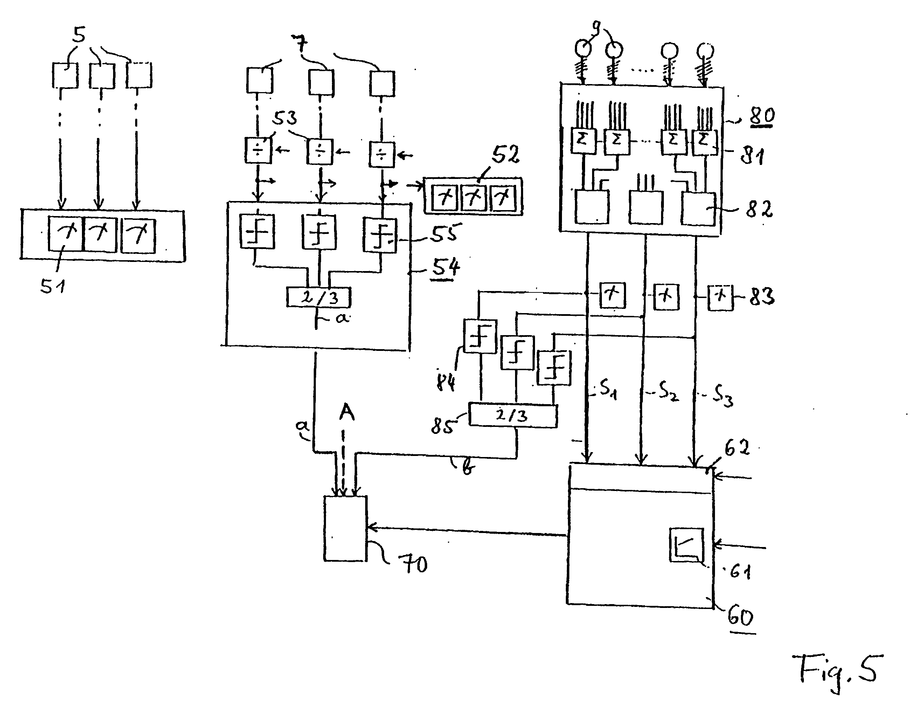

Figur 2 stellt den typischen Meßbereich für jedes dieser Systeme der nuklearen Instrumentierung dar. Die Anfahrbereichsdetektoren (AD) messen den Neutronenfluß P vom Neutronen-Quellpegel (Neutronenfluß des vollabgeschalteten Reaktorkerns) bis hin zu einer Reaktorleistung von größenordnungsmäßig 10⁻⁵ der Nennleistung. Der Quellpegel 10 liegt bei bestrahlten Kernen typischerweise bei rund 10⁻⁹ der Nennleistung, in Sonderfällen - wenn viele oder alle Brennelemente des Kerns frisch oder nur gering bestrahlt sind - kann er aber auch deutlich niedriger liegen.

Beim Anfahren eines abgeschalteten (unterkritischen) Reaktorkerns steigt durch wiederholtes teilweises Ausfahren von Steuerstäben der Quellpegel ständig leicht an bis schließlich der kritische Zustand (die sich selbst erhaltende Kettenreaktion) innerhalb des Meßbereichs der AD erreicht wird. Durch weiteres Ausfahren von Steuerstäben wird anschließend die gewünschte Anstiegsrate der Neutronenflußdichte (positive Reaktorperiode) eingestellt, so daß die Meßsignale der AD dann einen exponentiellen Anstieg der Neutronenflußdichte anzeigen. Aufgrund einer für die AD gewählten logarithmischen Signalanzeige kann der Reaktorfahrer die Signalentwicklung über viele Dekaden hinweg verfolgen und als Basis für seine Steuerungsaufgaben benutzen.

Überschreitet die Neutronenflußdichte bei ihrem Anstieg die Größe von etwa 10⁻⁶ der Nennleistung, so ist der Meßbereich der Übergangsbereichsdetektoren (UD) erreicht und deren Meßkanäle zeigen zusätzlich zu den AD-Meßkanälen die jeweilige Größe und Tendenz der Neutronenflußdichte an. Auch der UD-Meßbereich erstreckt sich über viele Dekaden bis hin zum Leistungsbereich. Zur Steigerung der Meßgenauigkeit ist dieser große Bereich in eine Reihe von Teilbereichen unterteilt, die in der in Figur 2 gezeigten Weise mit starken gegenseitiger Meßbereichs-Überlappung aufeinanderfolgen und z.B. mit einer Empfindlichkeitsstufung von jeweils 10^{1/2} : 1 zwischen aufeinanderfolgenden Teilbereichen ausgelegt sind.

Die Umschaltung der Teilbereiche erfolgt beim Ansteigen der Neutronenflußdichte für jeden UD-Meßkanal gesondert manuell durch das Personal, wenn sich das Signal dem oberen Meßbereichsende des gerade eingestellten Teilbereichs annähert.

Nahe dem oberen Meßbereichsende ist für jeden Teilbereich eines UD-Kanals eine Anregemarke eingerichtet. Wird diese von dem Meßsignal überschritten, so wird durch den betreffenden UD-Kanals automatisch ein Alarmsignal des Reaktorschutzsystems aktiviert, solange die Überschreitung andauert. Kommen weitere derartige Alarmsignale von anderen UD-Kanälen hinzu, so wird nach Maßgabe der im Reaktorschutzsystem hierfür vorgesehenen Wertungsschaltung eine Reaktorschnellabschaltung (RESA) eingeleitet - d.h. alle teilweise oder vollständig ausgefahrenen Steuerstäbe werden schnell in den Reaktorkern eingefahren. Der Kern geht dabei in den unterkritischen Zustand über und die Neutronenflußdichte sinkt auf den Quellpegel zurück.

Bei dem in Figur 1 dargestellten Beispiel mit drei Redundanzen wird die Einleitung der RESA im allgemeinen dann vorgenommen, wenn die Anregemarke in zwei beliebigen der insgesamt drei UD-Kanäle überschritten ist ("2 von 3"-Wertungsschaltung).

Nähert sich bei dem betrachteten planmäßigen Anfahrvorgang die Reaktorleistung der oberen Meßbereichsgrenze der AD-Kanäle von rund 10⁻⁵ der Nennleistung, so werden die AD-Detektoren zur Meßbereichserweiterung nach unten aus dem Kern herausgefahren und unterhalb des Reaktorkerns in Reflektorpositionen mit gegenüber dem Kerninneren reduzierter Neutronenflußdichte gestellt. Aus Figur 2 ist ersichtlich, daß aufgrund der gegenseitigen Überlappung der AD- und UD-Meßbereich um mehr als eine Dekade das Ausfahren der AD-Detektoren erst eingeleitet werden muß, wenn das UD-System die Überwachung der Neutronenflußdichte sicher übernommen hat. Durch eine geeignete Verriegelung ist sichergestellt, daß die AD-Detektoren gar nicht früher aus dem Kern herausgefahren werden können.

Es sei angemerkt, daß in neueren Ausführungen die Funktionen eines AD-Kanals und eines UD-Kanals auch in einem sogenannten "Weitbereichskanal" zusammengefaßt und von einem einzigen Weitbereichsdetektor (WD) gespeist sein können. Der Meßbereich eines solchen WD-Kanals umfaßt dann den gesamten in Bild 2 noch auf AD und UD aufgeteilten Bereich.

Überschreitet die Reaktorleistung die Größe von etwa 10⁻² der Nennleistung, so wird sie zusätzlich von den Leistungsbereichskanälen (LD-Kanälen) erfaßt (Figur 2) und für jeden Kanal auf einer linearen Skala angezeigt, deren Meßbereich sich typischerweise von 0 % bis 125 % der Nennleistung erstreckt. Es sind üblicherweise mindestens drei voneinander unabhängige und untereinander gleichartige LD-Kanäle vorhanden. Jeder LD-Kanal benutzt als Detektoren eine Vielzahl der praktisch gleichmäßig über das Kernvolumen verteilten neutronenempfindlichen Meßlanzen (Leistungsverteilungsdetektoren 9, "LVD"), deren nach Maßgabe der örtlichen Leistungsdichte kalibrierten Signalbeiträge im LD-Kanal summiert werden. Die Kanäle sind an einem geeigneten Ausgangs-Lastpunkt mit Hilfe einer Wärmebilanz auf die Reaktorleistung kalibriert. Auf diese Weise wird erreicht, daß die Anzeigegenauigkeit - die sogenannte "Spurtreue" - der LD-Kanäle für die Reaktorleistung auch bei beliebigen Änderungen von Leistungshöhe und Leistungsverteilung im Reaktorkern sehr hoch ist.

Die UD-Meßkanäle, die wegen der Verwendung von lokal im Kern angeordneten Einzel-Detektoren die Reaktorleistung nicht mit einer vergleichbaren, hohen Spurtreue messen können wie die LD-Kanäle, werden nicht mehr benötigt, nachdem und solange die Reaktorleistung einen Mindestwert überschreitet, der die ordnungsgemäße Erfassung der Reaktorleistung durch das LD-System gewährleistet. Dieser Mindestwert wird häufig mit 5 % der Nennleistung festgelegt. Ist er überschritten, können die UD-Kanäle z.B. durch Ausfahren ihrer Detektoren aus dem Reaktorkern und/oder durch Überbrückung ihrer Anregefunktionen außer Eingriff genommen werden.

Im LD-System sind eine Reihe von Anregemarken enthalten, von denen im Hinblick auf Gegenmaßnahmen bei Exkursionen die unverzögerte RESA-Anregung bei Erreichen einer festen, typischerweise bei etwa 120 % des Neutronenfluß-Nennwerts angeordneten Überlast-Grenzmarke von Bedeutung ist. Die Anregung dieses Grenzwerts durch die verschiedenen zueinander redundanten LD-Kanäle führt - wie beim UD-System - gemäß der vorgegebenen Wertungsschaltung zur Auslösung der Gegenmaßnahme. Bei einem beispielsweise 3-kanaligen LD-System ist dies üblicherweise ebenfalls eine (oder die bereits erwähnte) "2 von 3"-Wertungsschaltung.

Mit der vorstehend beispielhaft beschriebenen nuklearen Instrumentierung des Kernreaktors nach dem Stand der Technik ergibt sich folgender Ablauf einer Exkursion. Nach Erreichen des prompt kritischen Reaktorzustands im Anfahrbereich oder im Übergangsbereich - beispielsweise durch Fehlausfahren von Steuerstäben - erhöht sich die Neutronenflußdichte im Kern so schnell, daß die Umschaltung der UD-Teilbereiche hiermit nicht mehr Schritt halten kann (sofern sie vom Personal in einem solchen Falle überhaupt versucht wird). In rascher Folge werden die UD-Kanäle den RESA-Grenzwert ihres jeweils eingestellten Teilbereichs überschreiten und gemäß der vorgegebenen Wertungsschaltung die Reaktorschnellabschaltung auslösen. Aufgrund unvermeidlicher Totzeiten in der Signalverarbeitung sowie in elektrischen, mechanischen und hydraulischen Komponenten des Schnellabschaltsystems fahren die Steuerstäbe erst nach einer kurzen Totzeit in den Reaktorkern ein. Die Erfassung des schnellen Leistungsanstiegs durch die UD-Kanäle erfolgt redundant, so daß der Ausfall eines Kanals die Einleitung der Gegenmaßnahme nicht verhindert.

Um auch den gefährlichsten Extremfall zu berücksichtigen ("konservative" Betrachtung) sei angenommen, daß der Neutronenflußpegel in dieser Zeit schon größenordnungsmäßig in Bereich der Nennleistung angestiegen ist ("primäre Exkursion). Die damit verbundene Brennstofferwärmung hat dann über den prompt wirkenden Brennstofftemperatur-Reaktivitäts-Koeffizienten einen inhärenten Abbau der Überschußreaktivität bewirkt, so daß die Reaktorleistung bereits wieder abfällt, wenn die Steuerstäbe tatsächlich in den Kern einzufahren beginnen. Die Reaktorschnellabschaltung kann also bei konservativer Betrachungsweise weder das Auftreten der primären Exkursion verhindern noch ihren Verlauf entscheidend dämpfen. Ihr Zweck ist aber, denkbare Folgeexkursionen, die durch weiteres Ausfahren der den Störfall verursachenden Steuerstäbe und durch Abfließen der die Reaktivitäts-Gegenkopplung bestimmenden Wärmeenergie zustande kommen könnten, zu unterbinden.

Der Erfindung liegt die Aufgabe zugrunde, ein anderes Verfahren zur Überwachung bzw. Begrenzung des Leistungsanstiegs beim Anfahren eines mit Leistungsbereichskanälen versehenen Reaktors zu schaffen, das Folgeexkursionen überwacht, um die Zuverlässigkeit noch zu steigern, mit der eine geeignete Gegenmaßnahme ausgelöst wird. Insbesondere soll eine zusätzliche Anregung der Gegenmaßnahme über ein diversitäres, d.h. nach einem anderen Verfahren arbeitendes und vom UD-System völlig unabhängiges Überwachungssystem geschaffen werden.

Als eine solche Überwachungseinrichtung, die vom UD-System unabhängig und vorzugsweise diversitär ist, kommt anscheinend grundsätzlich das ebenfalls redundant aufgebaute LD-System nicht in Betracht, da die Überlast-Grenzmarke des LD-Systems die an eine Reaktivitäts-Exkursionsüberwachung zu stellenden Anforderungen bisher nicht erfüllt. Aufgrund der für derartige Störfälle typischen, sehr steilen Verteilungen der Neutronenflußdichte im Kern gehen nämlich die in der Nähe des Exkursionszentrums liegenden Detektoren dieses LD-Systems, die den Haupt-Signalbeitrag für die LD-Kanäle liefern, in Sättigung und können das ihren Meßbereich beträchtlich übersteigende Signal nicht in voller Höhe in den LD-Kanal einspeisen. Die ansonsten sehr gute Spurtreue von LD-Kanälen ist also bei Sättigung von zugeordneten LVD-Signalen naturgemäß nicht mehr gegeben, und das LD-Signal erreicht die Überlast-Grenzmarke nicht, obwohl die Reaktorleistung tatsächlich viel höher ist. Außerdem kann die Überlast-Grenzmarke schwächeren Exkursionen, die diese Leistung gar nicht erreichen, ebenfalls nicht entgegenwirken.

Die Erfindung geht aber davon aus, daß das LD-System eingesetzt werden kann, wenn ein Grenzwert benutzt wird, der auch im Exkursionsfall zuverlässig überwacht werden kann. Es wird also ein Grenzwert-Kriterium für das LD-System des Kernreaktors benutzt, das auch im Exkursionsfalle zuverlässig anspricht und diversitär zu der aus dem US-System bzw. WD-System abgeleiteten RESA-Anregung ist. Die Grenze, bei der eine Gegenmaßnahme eingeleitet werden muß, wird innerhalb des Meßbereichs der LD-Kanäle bei einer so niedrigen Leistung gesetzt, daß eine Sättigung der Detektoren des LD-Systems dort entweder generell noch nicht auftritt oder allenfalls nur einen vernachlässigbaren Einfluß haben kann. Dieser Grenzwert wird daher gemäß der Erfindung im allgemeinen weit unterhalb des Nennwerts der Reaktorleistung angeordnet, spricht also auch auf schwächere Exkursionen an. Zur Erfassung der Exkursion wird ein unter diesem Grenzwert liegendes Leistungsband als Filter eingesetzt, das nur auf die Anstiegsgeschwindigkeit anspricht, also ein ordnungsgemäßes, langsames Durchlaufen des Leistungsbandes zuläßt, ohne die Gegenmaßnahme zu aktivieren.

Die Erfindung sieht daher bei einem Kernreaktor, dessen Leistung im Normalbetrieb mittels Meßsignalen von Leistungsbereichsdetektoren in Leistungsbereichskanälen erfaßt wird, auch den Leistungsanstieg beim Anfahren bereits unter Verwendung mindestens des Meßsignals eines Leistungsbereichskanals zu überwachen. Als Auslösekriterium für eine Reaktorschnellabschaltung (RESA) oder eine ähnliche Gegenmaßnahme wird dabei benutzt, daß diese Gegenmaßnahme erst für erforderlich gehalten wird, wenn ein Leistungsband im unteren Teil des Meßbereichs dieses Leistungsbereichskanals schneller als in einer vorgegebenen Mindestzeit durchlaufen wird.

Wie bereits erläutert wurde, verläuft eine Primärexkursion so schnell, daß sie nicht verhindert werden kann; dies ist nicht erforderlich, wenn sich die Primärexkursion sofort wieder stabilisiert, ohne Folgeexkursionen auszulösen, die zu einem längerfristigen Leistungsanstieg führen könnten. Zur Verhinderung solcher Folgeexkursionen, also zur längerfristigen Begrenzung des Leistungsanstiegs beim Anfahren eines solchen Kernreaktors sieht die Erfindung daher ebenfalls vor, das Meßsignal eines Leistungsbereichskanals zu überwachen. Das Anfahren des Kernreaktors wird nur fortgesetzt, wenn dieses Meßsignal für die Reaktorleistung nach dem letzten Überschreiten einer unteren Grenzmarke eines im unteren Teil des Meßbereichs dieses Leistungsbereichskanals liegenden Leistungsbandes für die Dauer einer vorgegebenen Mindestzeit die obere Grenze des Leistungsbands nicht überschreitet.

Die Erfindung umfaßt auch eine Einrichtung zum Überwachen des Anfahrvorgangs eines solchen Kerns, die eine an mindestens einen Leistungsbereichskanal angeschlossene Logik enthält, die beim Überschreiten einer unteren Grenzmarke für ein im unteren Teil des Meßbereichs des Leistungsbereichskanals liegenden Leistungsbandes für eine vorgegebene Mindestzeit aktiviert wird. Diese Logik setzt dann ein Signal zum Anregen von Gegenmaßnahmen, wenn das Meßsignal des Leistungsbereichskanals für die Reaktorleistung eine obere Grenze des Leistungsbandes nicht überschreitet.

Weiterbildungen der Erfindung sind in den abhängigen Ansprüchen angegeben.

Die Verwendung von Zeitfenstern bei der Überwachung der Reaktorleistung und der Meßsignale von Leistungsbereichsdetektoren ist zwar bereits vorgeschlagen worden in Verbindung mit Oszillationen, die durch hydrodynamische Instabilitäten hervorgerufen werden können und ebenfalls eine Betriebsstörung darstellen. Solche Zeitfenster dienen aber dazu, weitere Zeitfenster bei der Überwachung des gleichen Meßsignals zu aktivieren oder werden durch ein anderes, aus dem Meßsignal abgeleitetes Aktivierungssignal aktiviert. Die vorliegende Erfindung hat mit solchen Oszillationen nichts zu tun, vielmehr sind das vorliegende Verfahren und die vorliegende Einrichtung vorzugsweise bereits ohne ein solches vorangegangenes, aus dem Meßsignal abgeleitetes Aktivierungssignal aktiv und werden auch nicht zur Aktivierung weiterer, für die Überwachung des Meßsignals benutzter Überwachungen oder Zeitstufen verwendet.

Anhand von zwei Ausführungsbeispielen und mehreren Figuren wird die Erfindung näher erläutert.

Es zeigen:
- FIG 1: den bereits erläuterten Reaktorkern mit den Positionen für Meßlanzen mit Detektoren für den Anfahrbereich, den Übergangsbereich und den Leistungsbereich;
- FIG 2: die bereits erläuterten Meßbereiche für die Anfahrbereichsdetektoren, die Übergangsbereichsdetektoren und die Leistungsbereichsdetektoren;
- FIG 3: eine Hardware-Schaltung, um die erfindungsgemäße Filterfunktion des Leistungsbandes zu erläutern;
- FIG 4: die Grenzmarken und Signalverläufe bei einer Primärexkursion, Folgeexkursionen und einem ordnungsgemäßen Anfahren;
- FIG 5: den prinzipiellen Aufbau einer Überwachung und Steuerung des Kerns nach dem Stand der Technik; und
- FIG 6: eine erfindungsgemäße Ergänzung für die Figur 5, zur diversitären Exkursionsüberwachung.

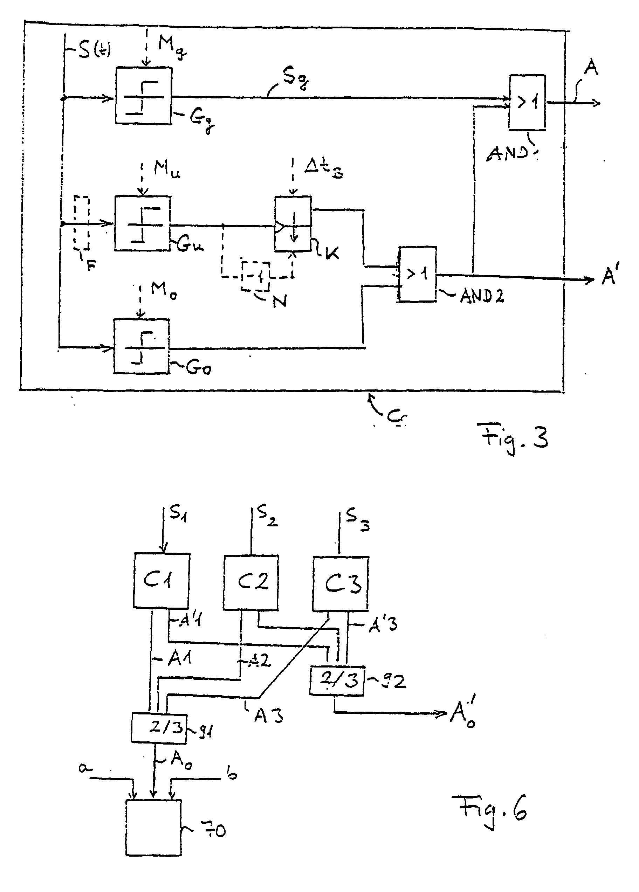

Eine Reaktorschnellabschaltung (RESA) oder überhaupt ein Eingriff in den geplanten Anfahrvorgang, der z.B. mittels eines Anfahrprogramms gesteuert werden kann, soll in der Anfahrphase (also bevor nach dem vorgesehenen Anfahrvorgang die Reaktorleistung in den typischen Meßbereich der LD-Detektoren einmündet) nur dann erfolgen, wenn die Reaktorleistung aufgrund einer Störung, z.B. einer Exkursion, einen Grenzwert Mg erreicht, der im Meßbereich der Detektoren des LD-Systems liegt (z.B. 30 % der Nennleistung P). Dies kann nach Figur 3 erfaßt werden, indem die Reaktorleistung S(t), z.B. das Signal in mindestens einem der LD-Kanäle, einem Grenzwertmelder Gg zugeführt wird, der bei Überschreiten des eingestellten Grenzwerts Mg ein entsprechendes Signal A zum Auslösen der Gegenmaßnahme aktiviert. Das ordnungswidrige Überschreiten des Grenzwerts Mg beim Anfahren muß aber von ordnungsgemäßen Betriebszuständen, bei denen das Anfahren planmäßig verläuft oder bereits Normalbetrieb vorliegt, unterschieden werden. Deshalb ist nach Figur 3 ein UND-Gatter AND1 vorgesehen, das als Filter wirkt, das solche Gegenmaßnahmen bei ordnungsgemäßen Betriebszuständen verhindert. Deshalb wird unter die Anregungsgrenze (Grenzwert Mg) ein Leistungsband gelegt, dessen untere Grenze durch eine Grenzmarke Mu definiert ist. Das Ausgangssignal Sg führt dabei nur dann zum Anregungssignal A für die Gegenmaßnahme, wenn das darunter liegende Leistungsband schneller als in einer vorgegebenen Mindestzeit Δt_{B} durchlaufen wurde (Filterwirkung des Leistungsbands).

Obwohl diese Vorgänge in der Regel als Software für die im Reaktor vorhandenen Überwachungen, Regelungen und Steuerungen realisiert wird, ist in Figur 3 dieser Filterwirkung des Leistungsbandes dargestellt. Dabei gibt ein Grenzwertmelder Gu bei Überschreiten der an ihm eingestellten unteren Grenzmarke Mu ein Signal ab, das eine bistabile Kippstufe K anstößt, deren Zeitkonstante gleich der Mindestzeit Δt_{B} ist und die in dieser Zeit einen entsprechenden Impuls auf einen Eingang eines UND-Gatters AND2 gibt. Der andere Eingang dieses Gatters ist mit einem zweiten Grenzwertmelder Go verbunden, der ein Signal abgibt, wenn das Meßsignal S(t) für die Reaktorleistung eine eingestellte obere Grenzmarke Mo überschreitet.

Überschreitet also das Signal S(t) die obere Grenzmarke Mo, erst nachdem die Zeitdauer Δt_{B} ("Bereitschafts-Zeitspanne") verstrichen ist, so ist die Kippstufe K (Zeitglied) bereits wieder im Ruhezustand und beide Gatter AND1 und AND2 sperren, so daß eine Aktivierung des Anregungssignals A durch das Signal Sg verhindert ist. Falls jedoch wegen einer Exkursion das Leistungsband schnell durchlaufen wird, also die obere Grenzmarke Mo noch innerhalb der Bereitschafts-Zeitspanne Δt_{B} überschritten wird, greift das Signal Sg auf das Anregungssignal A ein.

Die Ausführung mit zwei UND-Gattern und getrennten Werten für Mg und Mu ermöglicht, mit dem Anregungssignal A z.B. eine RESA-Anregung auszulösen, mit dem Ausgangssignal des Gatters AND2 jedoch eine andere Anregung A', mit der eine weniger dramatische Gegenmaßnahme eingeleitet werden kann. Spricht nämlich nur das Signal A' an, jedoch nicht das Signal A, so kann es sich um Störungen handeln, die sich auch ohne eine Reaktorabschaltung von selbst wieder stabilisieren, sofern z.B. lediglich der programmierte Anfahrvorgang verlangsamt oder gestoppt wird.

Eine Vereinfachung wird jedoch erreicht, wenn für Mu und Mg die gleiche obere Grenzmarke verwendet wird, wobei dann im Fall einer Hardware-Schaltung auf den Grenzwertmelder Gg und das Gatter AND1 verzichtet werden kann. Dann wird also nicht zwischen starken Exkursionen, bei denen sowohl das Leistungsband (Mo - Mu) schneller als in der Zeit Δt_{B} durchlaufen als auch die Anregungsgrenze Mg überschritten wird, von schwachen Exkursionen unterschieden werden, bei denen nur das Anstiegskriterium erfüllt wird, aber die Anregungsgrenze nicht erreicht wird.

Die Grenzmarken können in Abhängigkeit vom jeweiligen Fahrprogramm (also z.B. den angewählten Steuerstäben) oder dem Leistungssignal S(t) oder auf eine andere Weise betriebsabhängig vorgegeben werden. In den Grenzwertmeldern Gu und Go ist vorteilhaft der jeweilige Grenzwert Mu und/oder Mo für die Begrenzung des Leistungsbandes betriebsunabhängig. Dabei liegt das Leistungsband vorteilhaft im unteren Drittel, vorzugsweise im unteren Viertel der Nennleistung des Reaktors. Die Breite, also die Differenz Mo - Mu, und/oder die Mindestzeit Δt_{B} ist vorzugsweise betriebsunabhängig vorgegeben. Sie beträgt in der Regel weniger als ein Drittel, vorzugsweise weniger als ein Fünftel der Nennleistung.

Die oben beschriebene diversitäre Exkursionsüberwachung wird vorzugsweise für jeden LD-Kanal separat aufgebaut. Die von den verschiedenen zueinander redundanten LD-Kanälen gegebenenfalls auflaufenden Anregungen führen nach Maßgabe einer hierfür vorgesehenen elektronischen Auswertung zur Auslösung der Exkursions-Gegenmaßnahme. Als solche Gegenmaßnahme kommt vorzugsweise die Reaktorschnellabschaltung in Betracht.

Bei der Festlegung von Lage und Breite des Leistungsbands sowie der Bereitschafts-Zeitspanne Δt_{B} sind zur eindeutigen Unterscheidung zwischen Exkursionen und planmäßigen - eventuell beschleunigten - Anfahrvorgängen folgende Gesichtspunkte von Bedeutung. Das Leistungsband soll zweckmäßigerweise so festgelegt werden, daß sich Leistungsanstiege planmäßiger Anfahrvorgänge durch die hierbei relevanten Reaktivitäts-Rückkopplungseffekte in jedem Falle entweder bereits unterhalb des Bands stabilisiert haben oder sich spätestens innerhalb des Leistungsbands stabilisiert haben oder sich spätestens innerhalb des Leistungsbands stabilisieren, während es bei allen Exkursionen weitgehend ungedämpft durchlaufen wird. Diese Bedingung erfüllt der unterste Teil des für das Setzen von Grenzmarken nutzbaren Meßbereichs der LD-Kanäle am besten. Die Breite des Leistungsbands (also die Leistungsdifferenz Mₒ - Mᵤ) soll so groß sein, daß größenordnungsmäßig etwa 1 Minute dauert, wenn das Leistungsband mit der höchsten in diesem Leistungsbereich bei Normalbetrieb realisierbaren Laständerungsgeschwindigkeit durchfahren wird. Dann kann aus dem relativ großen Zeitbereich 1 s < Δt < 1 min eine zur eindeutigen Unterscheidung zwischen Exkursionen und planmäßigen Anfahrvorgängen geeignete Größe der Bereitschafts-Zeitspanne Δt_{B} gewählt werden, an deren leittechnische Einhaltung dann keine hohen Genauigkeitsanforderungen mehr gestellt werden müssen.

Als Beispiel sei eine Parameterkombination mit
Mᵤ = 5 % der Nennleistung
Mₒ = 20 % der Nennleistung
Δt_{B} = 20 s
angegeben, die im allgemeinen die vorstehend genannten Optimierungskriterien erfüllt.

Dabei wäre es unschädlich, wenn Primärexkursionen auftreten, die sich in geringen Bruchteilen einer Sekunde bereits wieder stabilisieren und deshalb z.B. durch die unvermeidlichen Trägheiten und Totzeiten der Hardware (Detektoren) und Software (elektronische Auswertung) praktisch nicht detektiert werden. Dies ist auch nicht erforderlich, da die Gegenmaßnahme nur eingeleitet werden muß, wenn in längeren Zeiten (etwa über einer Sekunde) ein meßbarer Anstieg der Leistung stattfindet. Dies ist in Figur 3 durch einen Filter für das Signal S(t) - z.B. den Glättungsfilter F am Eingang von Gu-symbolisch dargestellt.

In Figur 4 ist zunächst mit M(LD) der Grenzwert dargestellt, der im Stand der Technik bereits für das entsprechende Signal S(t) der Leistungsverteilungskanäle vorgegeben ist, um im Normalbetrieb z.B. bei Leistungsoszillationen, die durch hydraulische Instabilitäten hervorgerufen werden, oder bei ähnlichen Störungen eine Reaktorabschaltung vorzunehmen. Ein typischer Grenzwert M(LD) liegt z.B. bei 120 % der Nennleistung P des Reaktors.

Ferner ist in Figur 4 das Leistungsband durch die obere Grenzmarke Mo und die untere Grenzmarke Mu dargestellt. Ferner ist angenommen, daß zum Zeitpunkt t₁ eine Primärexkursion und eventuell dadurch ausgelöste Folgeexkursionen zu einem Anstieg der Leistung S(t) im Reaktor führen, noch bevor der Reaktor eigentlich aufgrund des planmäßigen Anfahrvorgangs eine Leistung von etwa 5 % der Nennleistung erreichen sollte. Der Reaktor befindet sich also in einem Zustand, in dem die UD-Systeme nach dem Stand der Technik die Überwachung des Reaktors übernehmen. Nach der Erfindung wird jedoch das Signal S(t) der LD-Kanäle zur Überwachung herangezogen. Hierzu wird zunächst beim Überschreiten der unteren Grenzmarke Mu für die Bereitschafts-Zeitspanne Δt_{B} eine Überwachungslogik aktiviert, die bei Überschreitung der oberen Grenzmarke Mo, die gleichzeitig die Anregungsgrenze für die Gegenmaßnahme darstellt, das entsprechende Überwachungssignal anregt, mit dem die Gegenmaßnahme eingeleitet wird. Als Folge dieser Gegenmaßnahme (z.B. einer Abschaltung, bei der alle Steuerstäbe wieder ganz in den Kern eingefahren werden) klingt die Reaktorleistung wieder ab, ohne einen gefährlichen Wert erreicht zu haben. Das Betriebspersonal kann dann die Gegenmaßnahme wieder aufheben und einen neuen Anfahrvorgang nach einem besseren Planprogramm einleiten oder den durch die Gegenmaßnahme unterbrochenen Anfahrvorgang planmäßig wieder aufnehmen.

Bei diesem planmäßigen Anfahrvorgang wächst dann die Reaktorleistung entsprechend dem Plan an und erreicht die Werte, in denen die LD-Systeme eine spurtreue Abbildung der Reaktorleistung liefern und das Signal S(t) daher von den LD-Systeme nach dem Stand der Technik überwacht wird. Dabei überschreitet das LD-Signal S(t) zum Zeitpunkt t₂ erneut die untere Grenzmarke Mu. Diese Grenzmarke liegt aber in einem Leistungsbereich (z.B. ≥ 5 %), in dem ein planmäßig angefahrener und entsprechend erwärmter Reaktor keine Exkursionen mehr zeigt. Bei dem planmäßigen Aufheizen durchläuft nunmehr das Signal S(t) das Leistungsband mit einer entsprechend geringen Anstiegsgeschwindigkeit, die erst zum Zeitpunkt t₃, also lange nach Ablauf der Bereitschafts-Zeitspanne Δt_{B}, zum überschreiten der oberen Grenzmarke Mo führt.

In Figur 5 sind zunächst die für den Anfahrbereich vorgesehenen Detektoren und Meßlanzen 5 der AD-Kanäle dargestellt, deren Signale z.B. in einer Anfahr-Überwachungselektronik 51 ausgewertet, dokumentiert und an Monitoren angezeigt werden können.

Die Übergangsbereichskanäle mit den Lanzen und Detektoren 7 können ebenfalls entsprechende Monitore 52 besitzen, wobei diese Kanäle noch eine Einrichtung 53 zur stufenweisen Verringerung der Meßempfindlichkeit dieser Kanäle besitzen. Diese Einrichtung 53 ist in Figur 5 durch das Symbol eines Dividierers angedeutet, wobei z.B. der entsprechende Verringerungsfaktor für die Empfindlichkeit vom Bedienungspersonal verändert wird, sobald an den Monitoren 52 erkennbar wird, daß das entsprechende Signal der UD-Kanäle den aktuell eingestellten Empfindlichkeitsbereich (vergleiche Figur 2) überschreiten. Die herkömmliche Überwachung des Anfahrvorgangs mittels der UD-Kanäle enthält eine Logik 54, die jeweils bei Überschreiten des Empfindlichkeitsbereichs (meßbar z.B. durch jeweils einen Grenzwertmelder 55 für jeden der drei dargestellten UD-Kanäle) ein Signal abgibt. Wenn bei der installierten Anzahl n von UD-Kanälen (hier: n = 3) wenigstens eine vorgegebene Anzahl m (hier: m = 2) eine solche Bereichsüberschreitung melden, gibt eine entsprechende "m aus n"-Schaltung (hier: die "zwei aus drei"-Schaltung 56) ein Signal a ab, mit dem in die Steuerung des Reaktors eingegriffen wird.

Diese Reaktorsteuerung ist in Figur 5 als eine entsprechende Steuer- und Regeleinrichtung 60 mit einem Regler 61 und einer Ist-Wert-Rechenschaltung 62 symbolisiert. Z.B. kann eine Leitstelle mit einem Display oder Monitor 83 für die Reaktorleistung vorgesehen sein, wobei ein +/--Schalter vom Personal betätigt wird, um die Steuerelemente in den Kern einzufahren oder auszufahren, wenn ein niedrigerer oder höherer Leistungssollwert angestrebt wird. An dieser Einrichtung 60 werden alle Sollwerte und Parameter für die planmäßige Steuerung des Reaktors eingestellt. Die Stellsignale für die entsprechenden Stellgrößen des Reaktorbetriebs werden in der Einrichtung 60 weitgehend programmgesteuert und automatisch mittels einer Fülle von im Reaktor ermittelter Ist-Werte und Stellglied-Rückmeldungen gebildet, die in Figur 5 durch die Ist-Werte S₁, S₂ und S₃ symbolisiert sind, die von den Sensoren und Detektoren der LD-Kanäle gebildet werden. Die Stellsignale selbst werden an eine entsprechende Stelleinrichtung 70 weitergegeben, die neben anderen Stelleinrichtungen (z.B. den Kühlmittelpumpen für den Kühlmittelkreislauf) vor allem die Antriebe zum Ein- und Ausfahren der Steuerstäbe in den Reaktor steuern.

Falls im Stand der Technik also die Überwachungseinrichtung 54 der UD-Kanäle ein entsprechendes Signal a liefert, wird in den von der Einrichtung 60 gesteuerten Reaktorbetrieb eingegriffen, z.B. indem der Regler 60 auf ein Abschaltprogramm übergeht oder in der Einrichtung 70 von der programmgemäßen Steuerung der Steuerstäbe mittels des Rechners 60 nunmehr direkt auf eine Abschaltung des Reaktors durch Einfahren der Steuerstäbe übergegangen wird.

Die LD-Kanäle sind in Figur 5 durch die entsprechenden Meßlanzen und Detektoren 9 dargestellt. In einer entsprechenden elektronischen Auswerteeinrichtung 80 werden die Signale defekter Sensoren nach Plausibilitätskriterien ausgeblendet, um in einer entsprechenden Signalverschaltung 81 nur plausible Meßsignale der über das Volumen des Reaktorkerns verteilten Sensoren zu vernetzen und in einer anschließenden Summenschaltung 82 jeweils ein Summensignal für jeden LD-Kanal zu bilden, das die lokale Verteilung der Leistung im Reaktor jeweils als ein Signal S₁, S₂ und S₃ für die Leistung des Reaktors erfaßt.

Jedes Signal S₁, S₂ und S₃ dieser redundanten Leistungsbereichskanäle wird in einem Grenzwertmelder 84 auf Überschreitung des Grenzwerts M(LD) überwacht. Wenn wenigstens zwei der drei Signale (allgemein: mindestens eine Anzahl m aus der Anzahl n der Grenzwertmelder-Signale) diesen Grenzwert überschreiten, gibt eine entsprechende Wertungsschaltung 85, also eine "zwei aus drei"-Schaltung (allgemein: "m aus n"-Schaltung) ein entsprechendes Signal b, mit dem in der Steuereinrichtung 60 ein Abschaltprogramm (oder eine andere geeignete Gegenmaßnahme) aktiviert werden kann, oder - wie in Figur 5 dargestellt - direkt in die Stelleinrichtung 70 für die Steuerelemente eingegriffen werden kann, um den normalen Anfahrvorgang zu unterbrechen und gegebenenfalls eine Schnellabschaltung einzuleiten.

Nicht dargestellt ist, daß von der Signalverschaltung 81 in Leistungsverteilungs-Kanälen zusammengefaßte Signale von Detektoren der Meßlanzen 9 zur Erfassung der dreidimensionalen Leistungsverteilung ebenfalls in drei redundanten Kanälen auf lokale Oszillationen überwacht werden, die ebenfalls das Signal b auslösen können.

Die Leistungsbereichsüberwachung durch die Auswerteeinrichtung 80 dient also dazu, entsprechende Meßsignale, die ständig von mehreren Leistungsbereichskanälen gebildet werden und die Reaktorleistung erfassen, nach dem Stand der Technik redundant zu überwachen. Eine solche Redundanz mittels der Signale S₁, S₂ und S₃ ist aber auch für die erfindungsgemäße Überwachung im Anfahrbereich vorgesehen. Die Stelleinrichtung 70 enthält einen entsprechenden Eingang A, mit dem der Stelleinrichtung 70 ein von einer entsprechenden Einrichtung geliefertes Anregungssignal zumindest während des Anfahrbetriebes aufschaltbar ist.

Daher sind gemäß FIG 6 jedem dieser Signale S₁, S₂ und S₃ eine der Figur 3 entsprechende Einrichtung C1, C2 und C3 zugeordnet. Auch deren Signale A1, A2 und A3 - und gegebenenfalls auch deren Signale A'1, A'2 und A'3 - sind daher ebenfalls durch eine "m aus n" Schaltung 91 bzw. 92 zu einem entsprechenden Signal A₀ bzw. A'₀ zusammengefaßt, mit dem das Anregungssignal A gesetzt werden kann. Die Reaktorleistung wird also ständig mittels Meßsignalen mehrerer Leistungsbereichskanäle erfaßt und redundant überwacht.

Durch die Erfindung kann die übliche Überwachung des Anfahrens mittels des Signals a durch die Überwachung mittels eines Signals A, bzw. A1, A2, A3 oder A₀ ersetzt werden, also durch eine Überwachung, die andere Sensoren und andere Kanäle benützt. Vorteilhaft wird aber diese Überwachung des Anfahrens als diversitäre Überwachung eingesetzt. Dann werden also zusätzlich zu der Überwachung mittels der Leistungsbereichskanäle und deren Detektoren 9 auch noch mittels des Signals a die Signale der Neutronenflußdetektoren 7 überwacht und gegebenenfalls für eine Gegenmaßnahme zum Begrenzen des Leistungsanstiegs herangezogen. Diese zusätzlich benutzten Neutronenflußdetektoren überwachen auf die bei Figur 2 gezeigte Weise bereits nach dem Stand der Technik den Neutronenfluß des Reaktorkerns auf Einhaltung eines aktuellen Maximalwerts, der betriebsabhängig vorgegeben wird, solange die Stäbe aus dem Kern gezogen werden und die Reaktorleistung noch im Übergangsbereich liegt. Dieser Maximalwert ist praktisch die in Figur 2 jeweils für jede Empfindlichkeitsstufe vorgegebene obere Grenze des Meßbereichs.

Gemäß der Erfindung kann aufgrund einer vorgegebenen Redundanz eine hohe Zuverlässigkeit im Anfahrbereich erreicht werden. Eine solche Redundanz besteht z.B. gemäß Figur 5 dadurch, daß mehrere redundant arbeitende, an eine Auswerteschaltung angeschlossene Logiken die Signale der Leistungsbereichskanäle verarbeiten. Wichtig ist die weitere Redundanz durch den Einsatz als diversitäres System zur Überwachungseinrichtung 54. Das Stellglied 70 für die Steuerstäbe ist also nicht nur vom Signal einer Überwachungseinrichtung nach Figur 3 oder 6 aktivierbar ist, sondern zusätzlich auch durch die an die Neutronenflußdetektoren 7 angeschlossene Überwachungseinrichtung 54, die auf anderen physikalischen Prinzipien und Detektoren aufbaut.

## Patentansprüche

1. Verfahren zum Überwachen des Leistungsanstiegs beim Anfahren eines Kernreaktors, dessen Leistung bei Normalbetrieb mittels Meßsignalen in Leistungsbereichskanälen erfaßt wird,
**dadurch gekennzeichnet, daß** mindestens das Meßsignal (S(t)) eines Leistungsbereichskanals überwacht wird, um eine Gegenmaßnahme auszulösen, wenn ein Leistungsband (Mᵤ, Mₒ) im unteren Teil des Meßbereichs des Leistungsbereichskanals schneller als in einer vorgegebenen Mindestzeit (Δt_{B}) durchlaufen wird.

2. Verfahren zur längerfristigen Begrenzung des Leistungsanstiegs beim Anfahren eines Kernreaktors, dessen Leistung bei Normalbetrieb mittels Meßsignalen in Leistungsbereichskanälen erfaßt wird,
**dadurch gekennzeichnet, daß** mindestens das Meßsignal (S(t)) eines Leistungsbereichskanals für die Reaktorleistung überwacht wird und das Anfahren des Kernreaktors nur fortgesetzt wird, wenn das Meßsignal (S(t)) für die Reaktorleistung nach dem letzten Überschreiten einer unteren Grenzmarke (Mᵤ) eines im unteren Teil des Meßbereichs des Leistungsbereichskanals liegenden Leistungsbands (Mᵤ, Mₒ) für die Dauer einer vorgegebenen Mindestzeit (Δt_{B}) die obere Grenze (Mₒ) des Leistungsbands (Mᵤ, Mₒ) nicht überschreitet.

3. Verfahren nach Anspruch 1 oder 2,
**dadurch gekennzeichnet, daß** das Meßsignal (S(t)) jedes Leistungsbereichskanals für die Reaktorleistung durch Summierung der Meßsignale von Leistungsverteilungsdetektoren gebildet wird, die über das Volumen des Reaktorkerns verteilt angeordnet sind.

4. Verfahren nach einem der Ansprüche 1 bis 3,
**dadurch gekennzeichnet, daß** für das Leistungsband eine betriebsunabhängige untere und/oder obere Grenzmarke (Mᵤ, Mₒ) festgelegt wird.

5. Verfahren nach einem der Ansprüche 1 bis 4,
**dadurch gekennzeichnet, daß** das Leistungsband (Mᵤ, Mₒ) im unteren Drittel, vorzugsweise im unteren Viertel der Nennleistung des Reaktors liegt.

6. Verfahren nach einem der Ansprüche 1 bis 5,
**dadurch gekennzeichnet, daß** die Breite (Mₒ - Mᵤ) des Leistungsbands (Mᵤ, Mₒ) und/oder die Mindestzeit (Δt_{B}) betriebsunabhängig vorgegeben wird.

7. Verfahren nach einem der Ansprüche 1 bis 6,
**dadurch gekennzeichnet, daß** die Breite (Mₒ - Mᵤ) des Leistungsbands (Mᵤ, Mₒ) weniger als 1/3, vorzugsweise weniger als 1/5 der Nennleistung beträgt.

8. Verfahren nach einem der Ansprüche 1 bis 7,
**dadurch gekennzeichnet, daß** die Mindestzeit (Δt_{B}) unter einer Minute liegt.

9. Verfahren nach einem der Ansprüche 1 bis 8,
**dadurch gekennzeichnet, daß** die Reaktorleistung ständig mittels Meßsignalen (S₁, S₂, S₃) von mehreren Leistungsbereichskanälen erfaßt und redundant überwacht wird.

10. Verfahren nach einem der Ansprüche 1 bis 9,
**dadurch gekennzeichnet, daß** beim Anfahren des Reaktors, aus dessen Reaktorkern Steuerstäbe herausgefahren werden, Signale von zusätzlichen Neutronenflußdetektoren (UD bzw. WD) überwacht werden.

11. Verfahren nach Anspruch 10,
**dadurch gekennzeichnet, daß** mit den zusätzlichen Neutronenflußdetektoren die Leistung des Reaktorkerns auf Einhaltung aktueller Maximalwerte überwacht wird, wobei der aktuelle Maximalwert beim Anfahren betriebsabhängig verändert wird.

12. Einrichtung zum Überwachen des Anfahrens eines Kernreaktors mit Leistungsdetektoren, deren Signale in Leistungsbereichskanälen verarbeitet werden,
**gekennzeichnet durch** eine an mindestens einen Leistungsbereichskanal angeschlossene Logik, die beim Überschreiten einer unteren Grenzmarke (Mᵤ) für ein im unteren Teil des Meßbereichs des Leistungsbereichskanals liegendes Leistungsband (Mᵤ, Mₒ) für eine vorgegebene Mindestzeit (Δt_{B}) aktiviert wird und ein Signal zum Anregen von Gegenmaßnahmen setzt, wenn das Meßsignal (S(t)) des Leistungsbereichskanals für die Reaktorleistung eine obere Grenze (Mₒ) des Leistungsbands (Mᵤ, Mₒ) überschreitet.

13. Einrichtung nach Anspruch 12,
**dadurch gekennzeichnet, daß** mit den Leistungsbereichskanälen mehrere redundant arbeitende Logiken verbunden sind, die an eine Wertungsschaltung angeschlossen sind.

14. Einrichtung nach Anspruch 12 oder 13, **gekennzeichnet durch** ein Stellglied zum Einfahren von Steuerstäben in den Reaktorkern und zum Abschalten des Reaktors, das vom Signal zum Anregen von Gegenmaßnahmen anregbar ist.

15. Einrichtung nach Anspruch 14,
**dadurch gekennzeichnet, daß** das Stellglied zusätzlich auch durch eine an zusätzliche Neutronenflußdetektoren angeschlossene Überwachungseinrichtung aktivierbar ist.

## Claims

1. Method for monitoring the power rise during startup of a nuclear reactor whose power is detected in power range channels in normal operation by means of measuring signals, **characterized in that** at least the measuring signal (S(t)) of one power range channel is monitored in order to initiate a countermeasure when a power band (Mᵤ, Mₒ) in the lower part of the measuring range of the power range channel is traversed more quickly than in a prescribed minimum time (Δt_{B}).

2. Method for longer term limitation of the power rise during startup of a nuclear reactor whose power is detected in power range channels in normal operation by means of measuring signals, **characterized in that** at least the measuring signal (S(t)) of one power range channel for the reactor power is monitored, and startup of the nuclear reactor is continued only when the measuring signal (S(t)) for the reactor power does not exceed the upper limit (Mₒ) of the power band (Mᵤ, Mₒ) after the last occasion of exceeding a lower limit mark (Mᵤ) of a power band (Mᵤ, Mₒ) situated in the lower part of the measuring range of the power range channel for the duration of a prescribed minimum time (Δt_{B}).

3. Method according to Claim 1 or 2, **characterized in that** the measuring signal (S(t)) of each power range channel for the reactor power is formed by summing the measuring signals of power distribution detectors which are arranged distributed over the volume of the reactor core.

4. Method according to one of Claims 1 to 3, **characterized in that** an operationally independent lower and/or upper limit mark (Mᵤ, Mₒ) is fixed for the power band.

5. Method according to one of Claims 1 to 4, **characterized in that** the power band (Mᵤ, Mₒ) is situated in the lower third, preferably in the lower quarter, of the rated power of the reactor.

6. Method according to one of Claims 1 to 5, **characterized in that** the width (Mₒ - Mᵤ) of the power band (Mᵤ, Mₒ) and/or the minimum time (Δt_{B}) are/is prescribed in an operationally independent fashion.

7. Method according to one of Claims 1 to 6, **characterized in that** the width (Mₒ - Mᵤ) of the power band (Mᵤ, Mₒ) is less than 1/3, preferably less than 1/5 of the rated power.

8. Method according to one of Claims 1 to 7, **characterized in that** the minimum time (Δt_{B}) is less than one minute.

9. Method according to one of Claims 1 to 8, **characterized in that** the reactor power is detected continuously by means of measuring signals (S₁, S₂, S₃) of a plurality of power range channels, and is monitored redundantly.

10. Method according to one of Claims 1 to 9, **characterized in that** during startup of the reactor from whose reactor core control rods are being withdrawn signals of additional neutron flux detectors (UD or WD) are monitored.

11. Method according to Claim 10, **characterized in that** the power of the reactor core is monitored for maintenance of current maximum values with the aid of the additional neutron flux detectors, the current maximum value being varied as a function of operation during startup.

12. Device for monitoring the startup of a nuclear reactor with the aid of power detectors whose signals are processed in power range channels, **characterized by** a logic circuit which is connected to at least one power range channel, is activated for a prescribed minimum time (Δt_{B}) when a lower limit mark (Mᵤ) for a power band (Mᵤ, Mₒ) situated in the lower part of the measuring range of the power range channel is exceeded, and sets a signal for initiating countermeasures when the measuring signal (S(t)) of the power range channel for the reactor power exceeds an upper limit (Mₒ) of the power band (Mᵤ, Mₒ).

13. Device according to Claim 12, **characterized in that** a plurality of redundantly operating logic circuits, which are connected to an evaluation circuit, are connected to the power range channels.

14. Device according to Claim 12 or 13, **characterized by** an actuator for inserting control rods into the reactor core and for shutting down the reactor, which actuator can be excited by the signal for the purpose of initiating countermeasures.

15. Device according to Claim 14, **characterized in that** the actuator can additionally also be activated by a monitoring device connected to additional neutron flux detectors.

## Revendications

1. Procédé de surveillance de la montée en puissance lors du démarrage d'un réacteur nucléaire, dont la puissance est relevée en fonctionnement normal au moyen de signaux de mesure dans des canaux de domaine de puissance,
**caractérisé en ce que** l'on surveille au moins le signal (S(t)) de mesure d'un canai de domaine de puissance pour déclencher une contre-mesure si une bande (Mᵤ, Mₒ) de puissance dans la partie inférieure du domaine de mesure du canal de domaine de puissance est parcourue plus rapidement que dans une durée (Δt_{B}) minimum prescrite.

2. Procédé de limitation en longue durée de la montée en puissance lors du démarrage d'un réacteur nucléaire, dont la puissance est relevée en fonctionnement normal au moyen de signaux de mesure dans des canaux de domaine de puissance,
**caractérisé en ce que** l'on surveille au moins le signal (S(t)) de mesure d'un canal de domaine de puissance pour la puissance du réacteur et on ne poursuit le démarrage du réacteur nucléaire que si le signal (S(t)) de mesure pour la puissance du réacteur ne dépasse pas, après le dernier dépassement d'un repère (Mᵤ) limite inférieur d'une bande (Mᵤ, Mₒ) de puissance se trouvant dans la partie inférieure du domaine. de mesure du canal de domaine de puissance, pendant la durée d'un temps (Δtₛ) minimum prescrit, la limite (Mₒ) supérieure de la bande (Mᵤ, Mₒ) de puissance.

3. Procédé suivant la revendication 1 ou 2,
**caractérisé en ce que** l'on forme le signal (S(t)) de mesure de chaque canal de domaine de puissance pour la puissance du réacteur en sommant les signaux de mesure de détecteurs de répartition de puissance qui sont répartis sur le volume du coeur du réacteur.

4. Procédé suivant l'une des revendications 1 à 3,
**caractérisé en ce que** l'on fixe pour la bande de puissance un repère (Mᵤ, Mₒ) limite inférieur et/ou supérieur indépendamment du fonctionnement.

5. Procédé suivant l'une des revendications 1 à 4,
**caractérisé en ce que** la bande (Mᵤ, Mₒ) de puissance est dans le tiers et, de préférence, dans le quart inférieur de la puissance nominale du réacteur.

6. Procédé suivant l'une des revendications 1 à 5,
**caractérisé en ce que** la largeur (Mₒ ― Mᵤ) de la bande (Mᵤ, Mₒ) de puissance et/ou le temps (Δt_{B}) minimum est prescrit indépendamment du fonctionnement.

7. Procédé suivant l'une des revendications 1 à 6,
**caractérisé en ce que** la largeur (Mₒ ― Mᵤ) de la bande (Mᵤ, Mₒ) de puissance est inférieure au 1/3 et, de préférence, est inférieure au 1/5^{e} de la puissance nominale.

8. Procédé suivant l'une des revendications 1 à 7,
**caractérisé en ce que** le temps (Δtₛ) minimum est inférieur à une minute.

9. Procédé suivant l'une des revendications 1 à 8,
**caractérisé en ce que** l'on relève la puissance du réacteur en permanence au moyen de signaux (S₁, S₂, S₃) de mesure de plusieurs canaux de domaine de puissance et on la surveille de manière redondante.

10. Procédé suivant l'une des revendications 1 à 9,
**caractérisé en ce que** lors du démarrage du réacteur, du coeur duquel on sort des barres de commande, on surveille des signaux de détecteurs (UD ou WD) supplémentaires de flux de neutrons.

11. Procédé suivant la revendication 10,
**caractérisé en ce que** l'on surveille par les détecteurs supplémentaires de flux de neutrons la puissance du coeur du réacteur pour maintenir des valeurs maximum actuelles, la valeur maximum actuelle étant modifiée en fonction du fonctionnement lors du démarrage.

12. Dispositif de surveillance du démarrage d'un réacteur nucléaire comprenant des détecteurs de puissance dont les signaux sont traités dans des canaux de domaine de puissance,
**caractérisé par** une logique qui est raccordée à au moins un canal de domaine de puissance et qui est activée si une bande (Mᵤ, Mₒ) de puissance se trouvant dans la partie inférieure du domaine de mesure du canal de domaine de puissance devient, pendant une durée (Δt_{B}) prescrite, inférieure à un repère (Mᵤ) limite inférieur et applique un signal pour mettre en oeuvre des contre-mesures si le signal (S(t)) de mesure du canal de domaine de puissance pour la puissance du réacteur dépasse une limite (Mₒ) supérieure de la bande (Mᵤ, Mₒ) de puissance.

13. Dispositif suivant la revendication 12,
**caractérisé en ce qu'**aux canaux de domaine de puissance sont reliés plusieurs logiques fonctionnant de manière redondante et raccordées à un circuit d'évaluation.

14. Dispositif suivant la revendication 12 ou 13,
**caractérisé par** un actionneur pour faire pénétrer des barres de commande dans le coeur du réacteur et pour interrompre le réacteur, cet actionneur pouvant être excité par le signal d'excitation de contre-mesure.

15. Dispositif suivant la revendication 14,
**caractérisé en ce que** l'actionneur peut être activé en outre aussi par un dispositif de surveillance raccordé à des détecteurs supplémentaires de flux de neutrons.
